# EUROPEAN PATENT APPLICATION

(11) **EP 4 769 805 A1**
(43) Date of publication of application: **01.07.2026**
(21) Application number: 24917333.7
(22) Date of filing: 19.12.2024
(51) Int. Cl.: H01M 50/519, H01M 50/503

(54) **DEVICE FOR ASSEMBLING BATTERY MODULE**

(30) Priority: 09.01.2024 KR 20240003679
(71) Applicant: LG Energy Solution, Ltd., Seoul 07335 (KR)
(72) Inventor: OH, Hyun Min, Daejeon 34122 (KR); JEUNG, Seok Won, Daejeon 34122 (KR); KANG, Choon Kwon, Daejeon 34122 (KR); AHN, Da Hun, Daejeon 34122 (KR)
(74) Representative: Plasseraud IP
(86) International application number: PCT/KR2024/020745
(87) International publication number: WO 2025/150739

(57) **Abstract**

The present disclosure relates to a battery module assembly apparatus, and according to an aspect of the present disclosure, the battery module assembly apparatus is a battery module assembly apparatus for assembling a circuit board to a semi-assembly of a battery module, and may include a fixing frame that is fixed to a side of the semi-assembly; and a rotating frame that is rotatably coupled to the fixing frame and configured to move the circuit board placed on a side of the rotating frame to an outer surface of the semi-assembly.

## Description

### TECHNICAL FIELD

### CROSS-REFERENCE TO RELATED APPLICATIONS

The present application claims priority to Korean Patent Application No. 10-2024-0003679 filed on January 9, 2024 in the Republic of Korea, the disclosure of which is incorporated herein by reference.

### TECHNICAL FIELD

The present disclosure relates to a battery module assembly apparatus, and more particularly, to a battery module assembly apparatus for assembling a circuit board to a semi-assembly of a battery module.

### BACKGROUND ART

Secondary batteries have been used in small-scale applications including mobile devices or laptop computers, but recently the direction of research is expanding to medium- and large-scale applications, and secondary batteries are being widely used in the industrial applications requiring high voltage and large capacity, including Energy Storage Systems (ESSs) or Electric Vehicles (EVs). A plurality of battery cells of secondary batteries may be connected and coupled by a predetermined method to form a battery module.

Meanwhile, the battery module may have a circuit board therein. The circuit board may electrically connect other components of the battery module, or may obtain electrical signals from other components to perform predetermined functions. For example, the circuit board may perform the function of connecting the battery cells to a battery management system (BMS) or transmitting the electrical signals from the battery cells to sensors. To do so, the battery module usually has a flexible circuit board having a predetermined flexibility.

Accordingly, in the manufacturing process of the battery module, a process of assembling the circuit board to a semi-assembly of the battery module is performed. The assembly of the circuit board to the semi-assembly of the battery module was done by operators. However, the manual assembly of the circuit board may cause contamination of the circuit board by external contamination sources.

For example, the semi-assembly of the battery module may have an adhesive-coated area where other components may attach, and in the assembly process of the circuit board, the operator's hand may be contaminated by the adhesive. When the operator holds the circuit board with his or her contaminated hand, the circuit board may be contaminated by the adhesive on the operator's hand.

When the contaminated circuit board is assembled to the semi-assembly, defects or faults may occur in the final product or the battery module. For example, when a welded part of the circuit board and the battery cell is contaminated, a welding defect may occur between the circuit board and the battery cell, thereby failing to properly measure the voltage or current of the battery cell or electrically connect the battery cell to other components.

Therefore, there has been an urgent need for development of a battery module assembly apparatus for assembling a circuit board to a semi-assembly of a battery module with minimal contact with potential contamination sources.

### SUMMARY

### TECHNICAL PROBLEM

The present disclosure is designed to solve the above-described problems, and therefore the present disclosure is directed to providing a battery module assembly apparatus for assembling a circuit board to a semi-assembly of a battery module with minimal contact with potential contamination sources.

The problems of the present disclosure are not limited to the aforementioned problems, and these and other problems will be clearly understood by persons having ordinary skill in the technical field pertaining to the present disclosure from the following description.

### TECHNICAL SOLUTION

According to an aspect of the present disclosure, there is provided a battery module assembly apparatus for assembling a circuit board to a semi-assembly of a battery module, the battery module assembly apparatus including a fixing frame that is fixed to a side of the semi-assembly; and a rotating frame that is rotatably coupled to the fixing frame and configured to move the circuit board placed on a side of the rotating frame to an outer surface of the semi-assembly.

In this instance, the rotating frame may include a board support portion extended in an arbitrary direction so that the circuit board is placed.

In this instance, the board support portion may include a suction portion to hold the circuit board by suction.

In this instance, the suction portion may include a plurality of suction portions arranged apart from each other along an extension direction of the board support portion.

In this instance, the rotating frame may include a sub-support portion extended from the board support portion.

In this instance, the sub-support portion may include a pair of sub-support portions, each sub-support portion disposed at each of two ends of the board support portion in the extension direction.

In this instance, the rotating frame may further include a pin support portion disposed on a side of the board support portion in the extension direction; and an assembly apparatus-side guide pin that is protruded outward from the pin support portion and inserted into a coupling hole of the circuit board.

In this instance, the assembly apparatus-side guide pin may include a plurality of assembly apparatus-side guide pins arranged apart along the extension direction of the board support portion.

In this instance, the assembly apparatus-side guide pin may be movably coupled to the pin support portion in a length direction.

In this instance, the pin support portion may include an elastic member to elastically support the assembly apparatus-side guide pin.

In this instance, the pin support portion may be connected to the side of the board support portion.

In this instance, the board support portion may have a board support surface where a part of the circuit board is placed in contact, the pin support portion may have a pin support surface where an end of the assembly apparatus-side guide pin sticks out, and the pin support surface and the board support surface may have different heights in a movement direction of the assembly apparatus-side guide pin.

In this instance, the pin support portion may have a guide pin hole into which the assembly apparatus-side guide pin is inserted, and the assembly apparatus-side guide pin may have a shorter length than the guide pin hole.

In this instance, at least a part of the assembly apparatus-side guide pin may have a larger diameter than a segment of the guide pin hole to prevent the assembly apparatus-side guide pin from moving out of the pin support portion.

In this instance, the guide pin may be configured to go into the guide pin hole when the guide pin is pressed by a part of the semi-assembly as the rotating frame rotates.

In this instance, the fixing frame may include a base portion extended in a direction so as to be disposed parallel to the side of the semi-assembly; and a fixing portion disposed at each of two sides of the base portion in an extension direction and fixed to a corner area of the semi-assembly.

In this instance, the rotating frame may be configured to rotate around an axis parallel to the extension direction of the base portion.

In this instance, the fixing portion may have a shape of a clamp that holds or releases the corner area of the semi-assembly.

In this instance, the base portion may have a shape of a flat plate disposed parallel to the side of the semi-assembly, and an assembly apparatus-side coupling portion may be present on a surface of the base portion, and be coupled to a part of the semi-assembly by close-fitting.

In this instance, the assembly apparatus-side coupling portion may include a plurality of assembly apparatus-side coupling portions arranged apart from each other in the extension direction of the base portion.

### ADVANTAGEOUS EFFECTS

According to an aspect of the present disclosure, as the fixing frame may be fixed to one side of the semi-assembly and the rotating frame may be rotatably coupled to the fixing frame, the rotating frame may move the circuit board toward the semi-assembly to assemble them.

Accordingly, it may be possible to minimize the contact between the operator and the circuit board in the process of assembling the circuit board to the semi-assembly, thereby preventing contamination of the circuit board by potential contamination sources.

The effects of the present disclosure are not limited to the aforementioned effects, and these and other effects will be clearly understood by persons having ordinary skill in the technical field pertaining to the present disclosure from the specification and the accompanying drawings.

### BRIEF DESCRIPTION OF THE DRAWINGS

FIG. 1 is a perspective view showing that a battery module assembly apparatus according to an embodiment of the present disclosure is fixed to a semi-assembly of a battery module when viewed from above.
FIG. 2 is a perspective view showing that a semi-assembly of a battery module and a circuit board are assembled together when viewed from above.
FIG. 3 is a perspective view of a battery module assembly apparatus according to an embodiment of the present disclosure when viewed from the back.
FIG. 4 is a perspective view of a battery module assembly apparatus according to an embodiment of the present disclosure when viewed from the front.
FIG. 5 is an enlarged view of section A in FIG. 4.
FIG. 6 is a perspective view of a battery module assembly apparatus according to an embodiment of the present disclosure when viewed from below.
FIG. 7 is a side view showing the rotation of a rotating frame of a battery module assembly apparatus according to an embodiment of the present disclosure.
FIG. 8 is a perspective view showing that a rotating frame of a battery module assembly apparatus according to an embodiment of the present disclosure is in rotated state when viewed from above.
FIG. 9 is a perspective view showing that a rotating frame of a battery module assembly apparatus according to an embodiment of the present disclosure is in rotated state when viewed from below.
FIG. 10 is an enlarged view of section B in FIG. 4.
FIG. 11 is a cross-sectional view of FIG. 10, taken along the line I-I.
FIG. 12 is a diagram showing the movement of a circuit board toward a semi-assembly by a rotating frame of a battery module assembly apparatus according to an embodiment of the present disclosure.
FIG. 13 is a diagram showing the assembly of a circuit board to a semi-assembly by a rotating frame of a battery module assembly apparatus according to an embodiment of the present disclosure.

### DETAILED DESCRIPTION

The exemplary embodiments of the present disclosure will be described in sufficient detail to enable those skilled in the art to easily carry out the present disclosure. However, the present disclosure may be embodied in many different forms and is not restricted or limited to the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, and rather, should be interpreted based on the meanings and concepts corresponding to the technical aspect of the present disclosure on the basis of the principle that the inventor is allowed to define the terms appropriately for the best explanation.

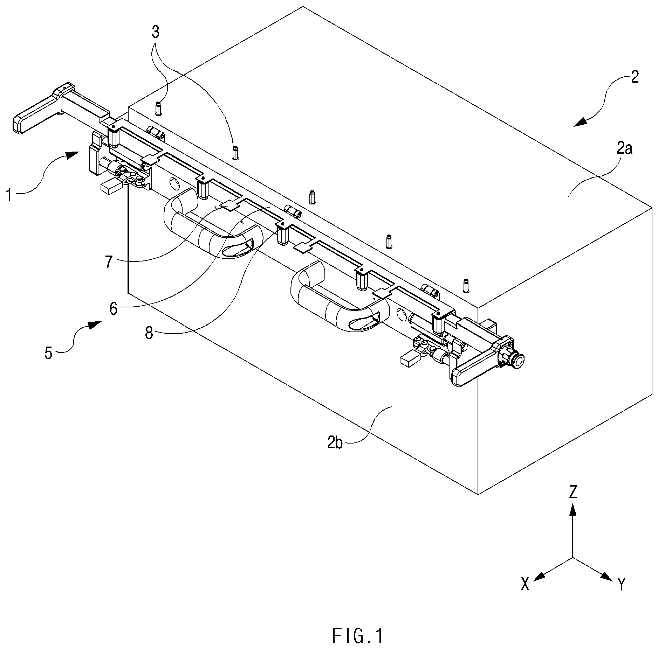

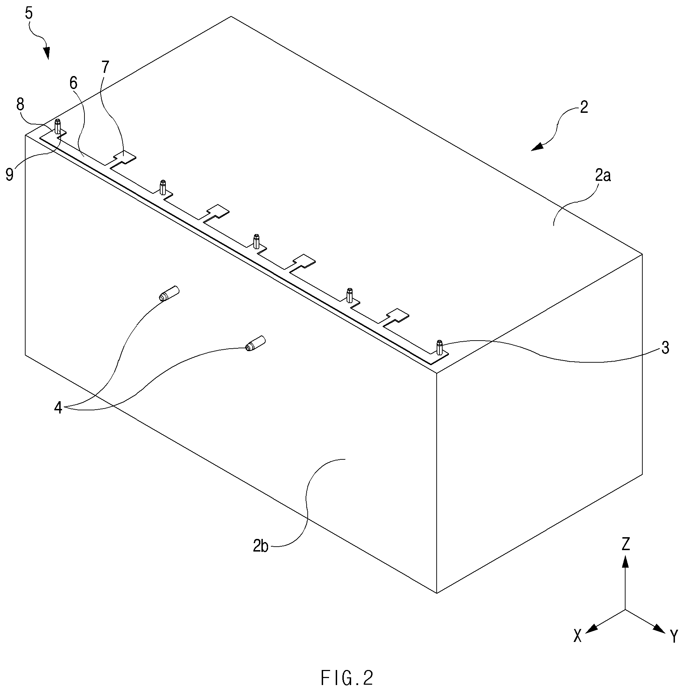

FIG. 1 is a perspective view showing that a battery module assembly apparatus according to an embodiment of the present disclosure is fixed to a semi-assembly of a battery module when viewed from above. FIG. 2 is a perspective view showing that the semi-assembly of the battery module and a circuit board are assembled together when viewed from above.

FIGS. 1 and 2 show the battery module assembly apparatus 1 (hereinafter referred to as assembly apparatus) according to an embodiment of the present disclosure. Referring to FIG. 1, the assembly apparatus 1 according to an embodiment of the present disclosure may be an apparatus for assembling the circuit board 5 to the semi-assembly 2.

Prior to the description of the assembly apparatus 1 according to an embodiment of the present disclosure, the semi-assembly 2 and the circuit board 5 that are assembled by the assembly apparatus 1 will be briefly described.

Referring to FIGS. 1 and 2, in the present disclosure, the semi-assembly 2 may be a semi-assembly for manufacturing a battery module. Although not shown in detail, the semi-assembly 2 may include a plurality of battery cells and a module frame or a module housing for supporting the battery cells.

As shown, the semi-assembly 2 may have a cubic shape as a whole. The semi-assembly 2 may have a semi-assembly-side guide pin 3 on an upper surface 2a.

The semi-assembly-side guide pin 3 may be a pin for guiding or coupling to assemble the circuit board 5 as described below to the upper surface 2a of the semi-assembly 2. To this end, the semi-assembly-side guide pin 3 may be protruded upward from the upper surface 2a of the semi-assembly 2.

Meanwhile, as shown, the semi-assembly-side guide pin 3 may include a plurality of semi-assembly-side guide pins arranged on a part of the upper surface 2a of the semi-assembly 2. In this instance, the part of the upper surface 2a of the semi-assembly 2 may be where the circuit board 5 as described below is assembled (hereinafter, assembly area).

As shown, the assembly area may be a left (positive direction of the X axis) edge area of the upper surface 2a of the semi-assembly 2, and the plurality of semi-assembly-side guide pins 3 may be arranged apart from each other along the left (positive direction of the X axis) edge on the upper surface 2a. However, the semi-assembly 2 that is assembled by the assembly apparatus 1 does not necessarily have the semi-assembly-side guide pins 3.

Referring to FIGS. 1 and 2, in the present disclosure, the circuit board 5 may be a board for electrically connecting battery cells of the battery module to each other, connecting the battery cells to a battery management system (BMS), or connecting the battery cells to other components such as sensors. As an example, the circuit board 5 may include a flexible circuit board having a predetermined flexibility, but is not limited thereto.

As shown, the circuit board 5 may include an extension portion 6, a pad portion 7 and a coupling hole forming portion 8. In this embodiment, the extension portion 6 may be a part of the circuit board 5 that is placed at the edge area of the upper surface 2a of the semi-assembly 2. The extension portion 6 may have a predetermined length in an arbitrary direction (Y-axis direction).

The extension portion 6 may have an electric circuit for connecting the pad portion 7 as described below or a connector (not shown). Accordingly, the components of the semi-assembly 2 may be electrically connected to each other.

The pad portion 7 may be a part of the circuit board 5 protruded outward from the extension portion 6. The pad portion 7 may be coupled to the battery cells, busbars or sensors. As an example, the coupling may be performed by a welding process. Accordingly, it is necessary to prevent contamination of the circuit board 5 for the purpose of good welding.

In this instance, the pad portion 7 may include a plurality of pad portions arranged apart from each other along the extension direction (Y-axis direction) of the extension portion 6. Through this, many different components of the semi-assembly 2 may be electrically connected to each other.

The coupling hole forming portion 8 may be a part of the circuit board 5 protruded outward from the extension portion 6. A coupling hole 9 may be formed in the coupling hole forming portion 8. The coupling hole 9 may be used in the assembly process of the circuit board 5 and the semi-assembly 2 to guide the relative position between them or couple the circuit board 5 to the semi-assembly 2. It will be described in detail below together with the assembly apparatus 1.

In this instance, the coupling hole forming portion 8 may include a plurality of coupling hole forming portions arranged apart from each other along the extension direction of the extension portion 6 (Y-axis direction). Through this, the coupling and assembly between the semi-assembly 2 and the circuit board 5 may be further enhanced.

Meanwhile, the semi-assembly 2 and the circuit board 5 described above are an example of semi-assembly and circuit board that may be assembled by the assembly apparatus 1 according to an embodiment of the present disclosure, and the assembly apparatus 1 according to an embodiment of the present disclosure may be used to assemble semi-assemblies and circuit boards having various shapes or structures.

Hereinafter, the assembly apparatus according to an embodiment of the present disclosure will be described in more detail with varying drawings.

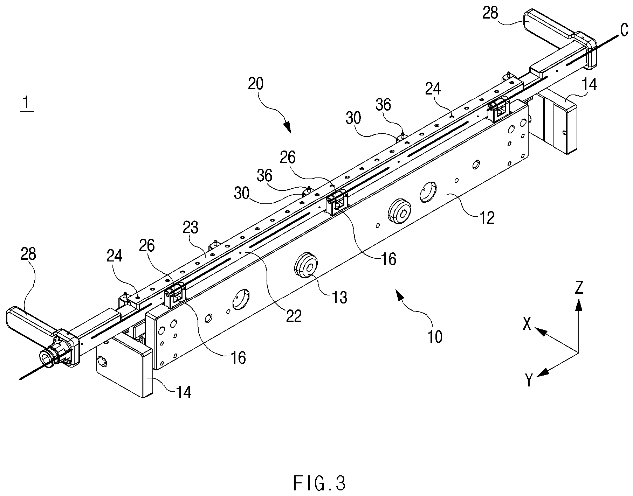

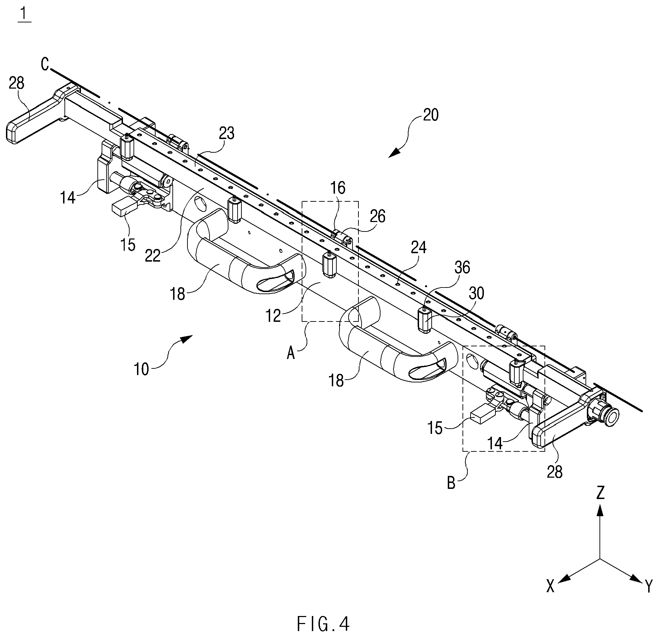

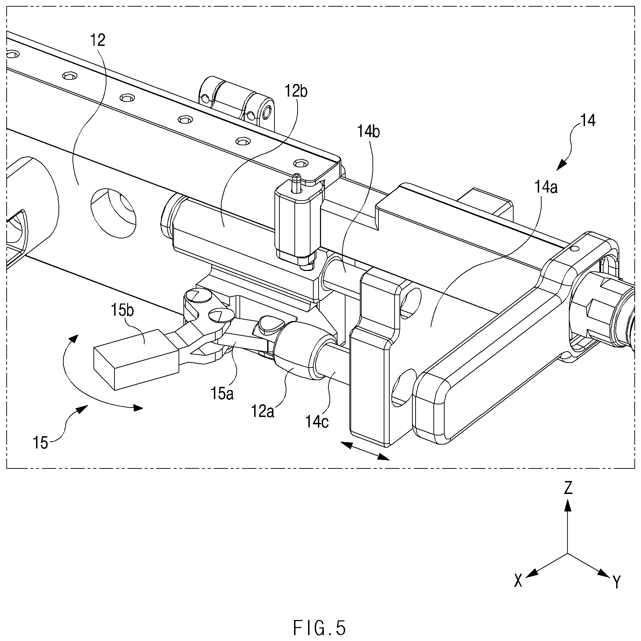

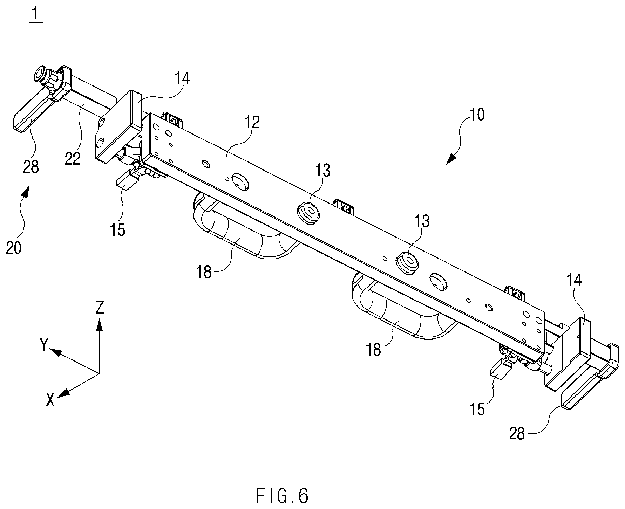

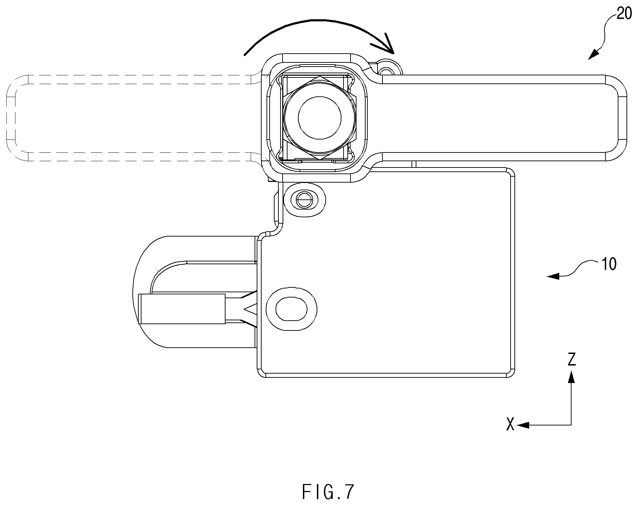

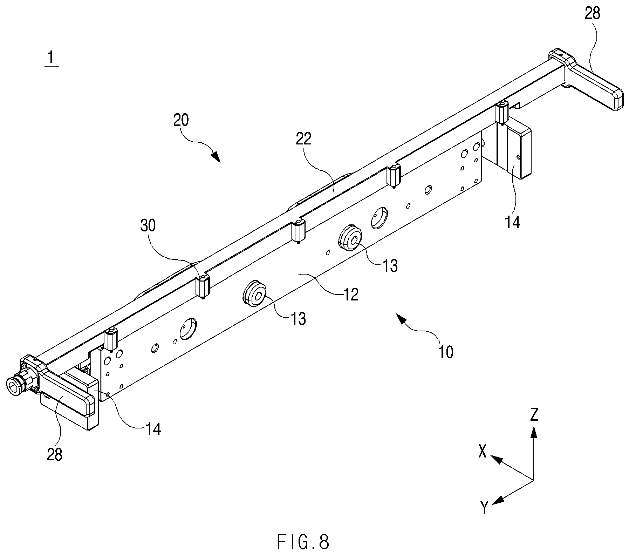

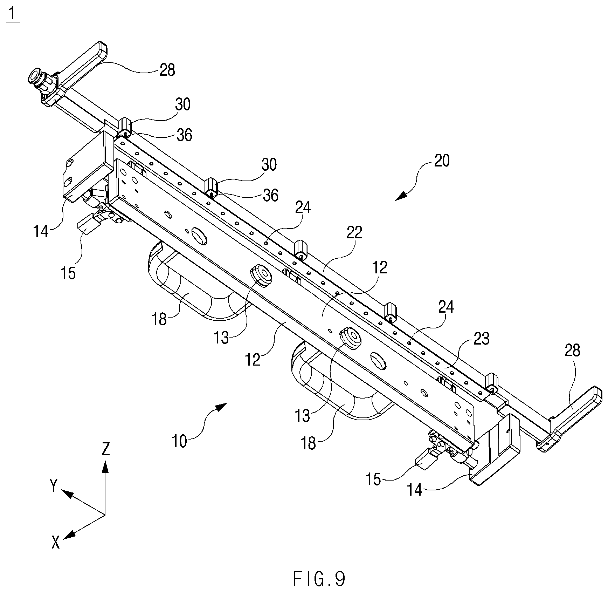

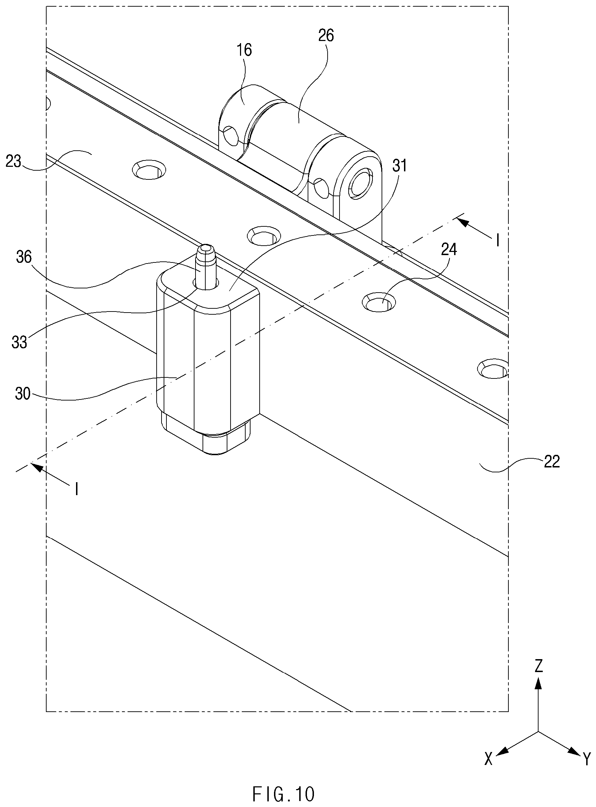

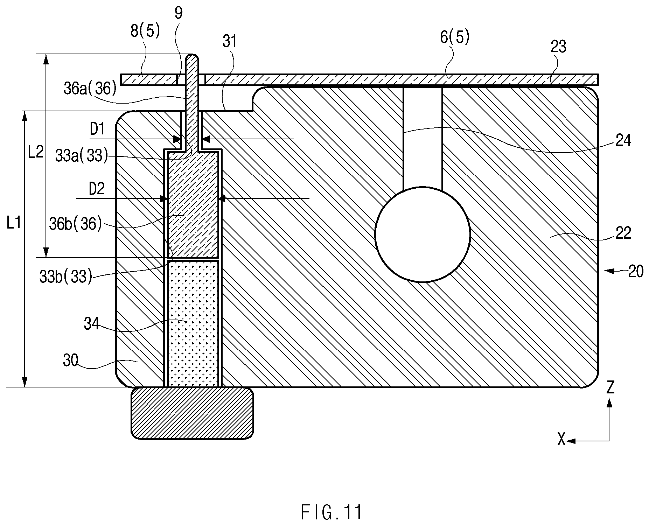

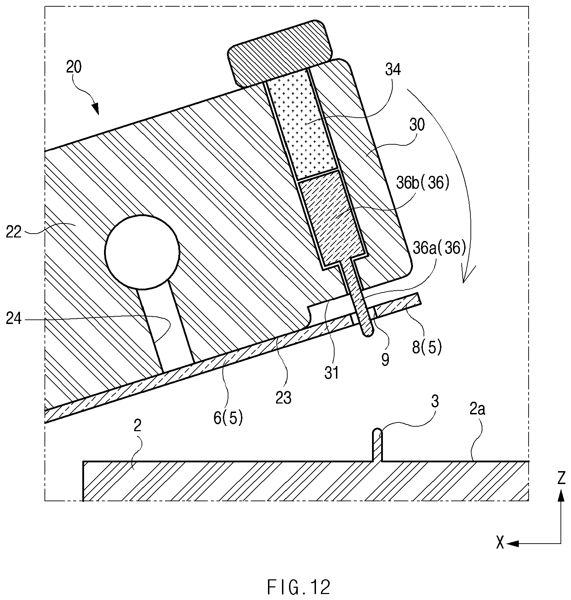

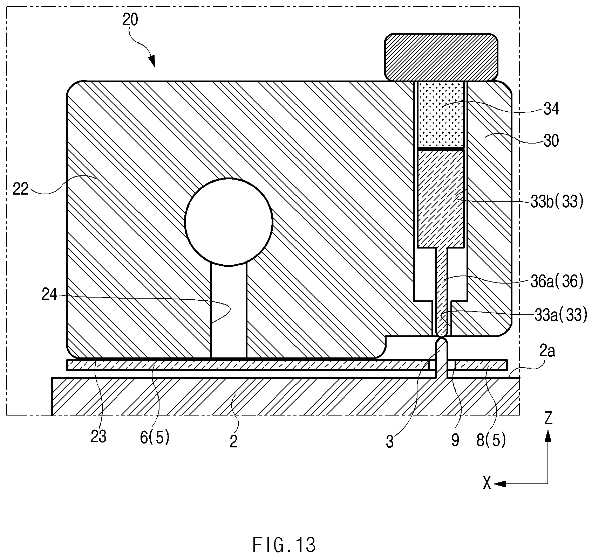

FIG. 3 is a perspective view of the battery module assembly apparatus according to an embodiment of the present disclosure when viewed from the back. FIG. 4 is a perspective view of the battery module assembly apparatus according to an embodiment of the present disclosure when viewed from the front. FIG. 5 is an enlarged view of section A in FIG. 4. FIG. 6 is a perspective view of the battery module assembly apparatus according to an embodiment of the present disclosure when viewed from below. FIG. 7 is a side view showing the rotation of a rotating frame of the battery module assembly apparatus according to an embodiment of the present disclosure. FIG. 8 is a perspective view showing that the rotating frame of the battery module assembly apparatus according to an embodiment of the present disclosure is in rotated state when viewed from above. FIG. 9 is a perspective view showing that the rotating frame of the battery module assembly apparatus according to an embodiment of the present disclosure is in rotated state when viewed from below. FIG. 10 is an enlarged view of section B in FIG. 4. FIG. 11 is a cross-sectional view of FIG. 10, taken along the line I-I. FIG. 12 is a diagram showing the movement of the circuit board toward the semi-assembly by the rotating frame of the battery module assembly apparatus according to an embodiment of the present disclosure. FIG. 13 is a diagram showing the assembly of the circuit board to the semi-assembly by the rotating frame of the battery module assembly apparatus according to an embodiment of the present disclosure.

Referring to FIGS. 1 to 4, the assembly apparatus 1 according to an embodiment of the present disclosure may include a fixing frame 10. The fixing frame 10 may be a frame for fixing the assembly apparatus 1 to the side of the semi-assembly 2. In this embodiment, the fixing frame 10 may be fixed to a part of the front side of the semi-assembly 2 (positive direction of the X axis), but the location at which the assembly apparatus 1 is fixed to the semi-assembly 2 is not limited to a particular one.

In this embodiment, the fixing frame 10 may include a base portion 12. As shown, the base portion 12 may have a shape of a plate extended in a direction (Y-axis direction). Accordingly, the base portion 12 may be disposed parallel to a lateral surface 2b of the semi-assembly 2.

The shape of the base portion 12 may be appropriately changed according to need. For example, when the semi-assembly 2 has a curved shape, at least a part of the base portion 12 may be curved to conform to the shape of the semi-assembly 2.

Referring to FIGS. 2, 3 and 6, the fixing frame 10 of the assembly apparatus 1 according to an embodiment of the present disclosure may include an assembly apparatus-side coupling portion 13. In this embodiment, the assembly apparatus-side coupling portion 13 may be configured to increase the coupling strength between the assembly apparatus 1 and the semi-assembly 2, or guide the relative position between the assembly apparatus 1 and the semi-assembly 2.

In this embodiment, the assembly apparatus-side coupling portion 13 may be disposed on one surface of the base portion 12. In this instance, the surface of the base portion 12 may be a surface that faces the lateral surface 2b of the semi-assembly 2. In the illustrated embodiment, the surface of the base portion 12 may be a rear surface that faces rearwards (negative direction of the X axis).

In this embodiment, the assembly apparatus-side coupling portion 13 may be configured to be coupled to a part of the semi-assembly 2 by close-fitting. As shown, the semi-assembly 2 may have a semi-assembly-side coupling portion 4 on the lateral surface 2b, and the assembly apparatus-side coupling portion 13 may be configured to be coupled to the semi-assembly-side coupling portion 4 by close-fitting.

In this embodiment, the semi-assembly-side coupling portion 4 may have a shape of a protrusion protruded from the lateral surface 2b, and the assembly apparatus-side coupling portion 13 may be provided in the form of a groove or a hole formed on the rear surface of the base portion 12. The semi-assembly-side coupling portion 4 may be inserted and coupled into the assembly apparatus-side coupling portion 13.

Through this, the assembly apparatus 1 may be coupled and fixed to the lateral surface 2b of the semi-assembly 2 more stably. Further, in the process of fixing the assembly apparatus 1 to the side of the semi-assembly 2, the coupling portions 4, 13 may perform the function of guiding the relative position between the assembly apparatus 1 and the semi-assembly 2 together.

Although this embodiment describes the assembly apparatus-side coupling portion 13 provided in the form of the hole or groove and the semi-assembly-side coupling portion 4 having the shape of the protrusion, the assembly apparatus-side coupling portion 13 may have the shape of a protrusion and the semi-assembly-side coupling portion 4 may be provided in the form of a hole or a groove.

Meanwhile, in this embodiment, the assembly apparatus-side coupling portion 13 may include a plurality of assembly apparatus-side coupling portions. In addition, the plurality of assembly apparatus-side coupling portions 13 may be arranged apart from each other along the extension direction of the base portion 12 (Y-axis direction). Through this, the assembly apparatus 1 may be fixed to the semi-assembly 2 in a more balanced manner.

Referring to FIGS. 2 to 6, the fixing frame 10 of the assembly apparatus 1 according to an embodiment of the present disclosure may include a fixing portion 14. In this embodiment, the fixing portion 14 may be configured to generate a predetermined fixing or coupling force in order to fix the assembly apparatus 1 to the semi-assembly.

In this embodiment, the fixing portion 14 may have a shape of a clamp that holds or releases a corner area of the semi-assembly 2. In this embodiment, the corner area of the semi-assembly 2 may be a corner at one side of the lateral surface 2b in the length direction (Y-axis direction). The corner may be extended in the top-bottom direction (Z-axis direction).

In this instance, in this embodiment, the fixing portion 14 may include a pair of fixing portions, each fixing portion disposed at each of two sides of the base portion 12 in the extension direction (Y-axis direction). The pair of fixing portions 14 may hold or release the corners at the two sides of the lateral surface 2b of the semi-assembly 2 in the length direction (Y-axis direction), respectively. Accordingly, the assembly apparatus 1 may be fixed to the lateral surface 2b of the semi-assembly 2 stably in a more balanced manner.

Referring to FIGS. 2 and 5 together, the base portion 12 may include a guide portion 12a, 12b on a surface that faces away from the semi-assembly 2. In this instance, the surface of the base portion 12 may be a front surface that faces frontwards (positive direction of the X axis). In other words, the surface of the base portion 12 may be the front surface opposite the rear surface of the base portion 12 where the assembly apparatus-side coupling portion 13 is disposed.

In this embodiment, the guide portion 12a, 12b may be configured to guide the movement of the fixing portion 14. The fixing portion 14 may be moved to hold or release the corner area of the semi-assembly 2, and the guide portion 12a, 12b may guide the movement of the fixing portion 14.

In this embodiment, the guide portion 12a, 12b may be provided as a cylindrical member coupled to the front surface of the base portion 12. This may allow a guide rod 14b, 14c of the fixing portion 14 as described below to move through the guide portion 12a, 12b. The guide portion 12a, 12b may be extended parallel to the extension direction of the base portion 12 (Y-axis direction).

In this instance, in this embodiment, the guide portion 12a, 12b may include an upper guide portion 12a and a lower guide portion 12b spaced apart from each other in the top-bottom direction (Z-axis direction). In other words, the upper guide portion 12a and the lower guide portion 12b may be spaced apart from each other in the width direction of the base portion 12 (Z-axis direction). This may guide the upper guide rod 14b and the lower guide rod 14c as described below, respectively.

Through this, the fixing portion 14 may be stably moved in the length direction of the lateral surface 2b of the semi-assembly 2 (Y-axis direction). In other words, the fixing portion 14 may be moved in a balanced manner in the length direction (Y-axis direction) of the lateral surface 2b of the semi-assembly 2, without rotating in the height direction of the lateral surface 2b (Z-axis direction) or a direction perpendicular to the lateral surface 2b (X-axis direction).

Meanwhile, the fixing portion 14 of the assembly apparatus 1 according to an embodiment of the present disclosure may include a fixing pad 14a and the guide rod 14b, 14c. The fixing pad 14a may be a pad for holding or releasing the corner area of the semi-assembly 2. The fixing pad 14a may be provided as a rectangular block-shaped member, but the shape may be appropriately changed according to need.

The operation of the fixing portion 14 will be described in more detail below.

In this embodiment, when the fixing pads 14a of the fixing portions 14 at the two sides of the base portion 12 in the extension direction (Y-axis direction) are moved closer to each other, the fixing portions 14 may hold the corners of the semi-assembly 2 positioned therebetween. Accordingly, the fixing frame 10 may be coupled or fixed to the semi-assembly 2.

On the contrary, when the fixing pads 14a are moved away from each other, the fixing portions 14 may release the corners of the semi-assembly 2 positioned therebetween. Accordingly, the fixing frame 10 may be decoupled or separated from the semi-assembly 2.

Meanwhile, in this embodiment, the base portion 12 and the fixing pad 14a may be in surface contact with the lateral surface 2b of the semi-assembly 2 and other lateral surface, respectively. In this instance, the other lateral surface of the semi-assembly 2 may be a surface that intersects the lateral surface 2b at the corner.

To this end, the fixing pad 14a may be disposed inclined or perpendicular with respect to the base portion 12. This configuration may increase the coupling or fixing strength between the fixing frame 10 and the semi-assembly 2. Through this, the assembly apparatus 1 may be fixed and coupled to the semi-assembly 2 more stably.

Meanwhile, in this embodiment, the fixing pad 14a may have a cushioning member (not shown) on the surface of contact with the semi-assembly 2. The cushioning member may be made of a material having higher elasticity than the fixing pad 14a. This may prevent the semi-assembly 2 from being damaged by the fixing portion 14. For example, the cushioning member may include rubber, but is not limited thereto.

Meanwhile, in this embodiment, the guide rod 14b, 14c of the fixing portion 14 may be a rod for guiding the movement of the fixing pad 14a. To this end, one end of the guide rod 14b, 14c may be coupled to the fixing pad 14a.

Additionally, in this embodiment, the guide rod 14b, 14c may be extended in the direction parallel to the extension direction of the base portion 12 (Y-axis direction). Additionally, the guide rod 14b, 14c may be movably coupled to the guide portion 12a, 12b of the base portion 12 in the extension direction (Y-axis direction). Accordingly, the fixing pad 14a may be moved in the extension direction of the base portion 12 (Y-axis direction) with the guidance of the guide portion 12a, 12b.

Meanwhile, in this embodiment, the guide rod 14b, 14c may include an upper guide rod 14b and a lower guide rod 14c. In addition, the upper guide rod 14b and the lower guide rod 14c may be coupled to the upper guide portion 12a and the lower guide portion 12b, respectively. Accordingly, the fixing pad 14a may be moved in unrotated state stably in a balanced manner.

Referring to FIGS. 2, 4 and 5, the fixing frame 10 of the assembly apparatus 1 according to an embodiment of the present disclosure may include a lever portion 15. The lever portion 15 may be configured to operate the fixing portion 14. The lever portion 15 may be manipulated manually by an operator or automatically by a predetermined actuator connected thereto.

In this instance, in this embodiment, the lever portion 15 may include a pair of lever portions operably coupled to the pair of fixing portions 14, respectively. Accordingly, each of the pair of fixing portions 14 may work individually.

In this embodiment, the lever portion 15 may include a connection link 15a and a lever link 15b. The lever link 15b may be a link that is manipulated by the operator or the actuator, and the connection link 15a may be a link that transmits the manipulation force from the lever link 15b to the fixing portion 14.

In this embodiment, the connection link 15a may have a shape of a rod. Additionally, one side of the connection link 15a may be coupled to one end of at least one of the upper guide rod 14b or the lower guide rod 14c of the fixing portion 14.

As shown, one side of the connection link 15a may be coupled to one end of the lower guide rod 14c. In this instance, in this embodiment, the end of the lower guide rod 14c may be an end opposite to the end coupled to the fixing pad 14a.

Additionally, in this embodiment, the other side of the connection link 15a may be coupled to the lever link 15b. In this instance, in this embodiment, one side and the other side of the connection link 15a may be rotatably coupled to the lower guide rod 14c and the lever link 15b, respectively. To this end, the connection link 15a and the lower guide rod 14c may be coupled by a predetermined pin.

In this embodiment, the lever link 15b may be rotatably coupled to each of the base portion 12 and the connection link 15a. To this end, the lever link 15b may be coupled to the base portion 12 and the connection link 15a by a predetermined pin.

Additionally, in this embodiment, a part of the lever link 15b may be extended outward from the base portion 12. This may provide a base for connection to the actuator or the operator's manipulation.

Referring back to FIGS. 3 and 4, the fixing frame 10 of the assembly apparatus 1 according to an embodiment of the present disclosure may include a fixing frame-side rotation coupling portion 16. The fixing frame-side rotation coupling portion 16 may be configured to provide a base to which the rotating frame 20 as described below is rotatably coupled.

In this embodiment, the fixing frame-side rotation coupling portion 16 may have a shape of a hinge at the upper edge area of the base portion 12. However, the structure or position of the fixing frame-side rotation coupling portion 16 is not limited to a particular one and may include any structure or position for rotatable coupling of the rotating frame 20.

Meanwhile, in this embodiment, the fixing frame-side rotation coupling portion 16 may include a plurality of fixing frame-side rotation coupling portions. In addition, the plurality of fixing frame-side rotation coupling portions 16 may be arranged apart from each other in the extension direction of the base portion 12 (Y-axis direction). Through this, the fixing frame 10 may support the rotating frame 20 more stably in a balanced manner.

The fixing frame 10 of the assembly apparatus 1 according to an embodiment of the present disclosure may include a grip portion 18. The grip portion 18 may have a shape of a handle that the operator grasps to move the assembly apparatus 1. For the operator's convenience, the grip portion 18 may include a plurality of grip portions.

In this embodiment, the grip portion 18 may be disposed on the surface of the base portion 12 that faces away from the semi-assembly 2. In this instance, the surface of the base portion 12 may be the front surface that faces frontwards (positive direction of the X axis). In other words, the surface of the base portion 12 may be the front surface opposite the rear surface of the base portion 12 where the assembly apparatus-side coupling portion 13 is disposed. This may prevent interferences between the grip portion 18 and the semi-assembly 2.

Referring to FIGS. 1 to 4, the assembly apparatus 1 according to an embodiment of the present disclosure may include the rotating frame 20. In this embodiment, the rotating frame 20 may be a frame for moving the circuit board 5 toward the semi-assembly 2 and assembling it to the assembly area. To this end, the circuit board 5 may be placed on one side of the rotating frame 20, and the rotating frame 20 may be rotatably coupled to the fixing frame 10.

As described above, according to the assembly apparatus 1 according to an embodiment of the present disclosure, because the circuit board 5 is moved toward the semi-assembly 2 by the rotating frame 20, it may be possible to minimize the contact between the operator and the circuit board 5. Through this, it may be possible to prevent contamination of the circuit board 5 in the assembly process of the circuit board 5 and the semi-assembly 2.

In this embodiment, the rotating frame 20 may include a board support portion 22. The board support portion 22 may be configured to support the circuit board 5. In this embodiment, the board support portion 22 may have a shape of a bar or rod extended in the direction parallel to the base portion 12 (Y-axis direction).

This may be because the circuit board 5 includes the extension portion 6 extended in a direction. The shape of the board support portion 22 may be appropriately changed according to the shape of the circuit board 5. For example, when the circuit board 5 has a curved shape, at least a part of the board support portion 22 may be extended in a curved shape to conform to the shape of the circuit board 5.

Referring to FIGS. 3 and 4, the board support portion 22 may have a board support surface 23 on a side in the extension direction. In this instance, the side of the board support portion 22 may refer to an upper side of the board support portion 22 (positive direction of the Z axis) on the basis of FIGS. 3 and 4.

In this embodiment, the board support surface 23 may be an outer surface of the board support portion 22 on which the extension portion 6 of the circuit board 5 is placed in surface contact. In this instance, the board support surface 23 may be disposed along the extension direction of the board support portion 22 (Y-axis direction) to support the circuit board 5 more stably.

Meanwhile, in this embodiment, the board support surface 23 may be a flat plane. This may be because the extension portion 6 of the circuit board 5 has a shape of a flat plate. A part of the board support surface 23 may be formed concavely or convexly according to need.

The rotating frame 20 of the assembly apparatus 1 according to an embodiment of the present disclosure may include a suction portion 24. The suction portion 24 may be configured to hold and fix the circuit board 5 placed on the board support portion 22 to the rotating frame 20 by suction.

In this embodiment, the suction portion 24 may be provided in a shape of an opening where negative pressure is applied. To this end, the board support portion 22 may have a hydraulic circuit therein to apply negative pressure to the suction portion 24. In this instance, the magnitude of the negative pressure applied to the suction portion 24 may be appropriately controlled to prevent damage to the circuit board 5 such as crumpling. As an example, the magnitude of the negative pressure may be controlled to 92 kPa.

In this instance, in this embodiment, the suction portion 24 may include a plurality of suction portions arranged apart from each other along the extension direction of the board support surface 23 (Y-axis direction). The arrangement or position of the plurality of suction portions 24 may be appropriately changed according to the shape of the area where the circuit board 5 is placed on the board support surface 23.

Meanwhile, referring to FIGS. 2 to 4 and 7 to 9, in this embodiment, the rotating frame 20 may be rotatably coupled to the fixing frame 10. This may move the circuit board 5 placed on the board support portion 22 to the assembly area of the upper surface 2a of the semi-assembly 2.

To this end, the rotating frame 20 of the assembly apparatus 1 according to an embodiment of the present disclosure may include a rotating frame-side rotation coupling portion 26. The rotating frame-side rotation coupling portion 26 may be protruded outward from the board support portion 22 and rotatably coupled to the fixing frame-side rotation coupling portion 16 of the fixing frame 10.

In this instance, in this embodiment, the rotating frame-side rotation coupling portion 26 and the fixing frame-side rotation coupling portion 16 may form a hinge coupling structure. However, the shape of the rotating frame-side rotation coupling portion 26 is not limited to a particular one and may include any shape for rotatable coupling to the fixing frame-side rotation coupling portion 16.

In this instance, in this embodiment, the rotating frame-side rotation coupling portion 16 may be coupled to allow the rotational frame 20 to rotate around a predetermined rotation axis C with respect to the fixing frame 10. Here, the rotation axis C may be an axis parallel to the extension direction of the base portion 12 (Y-axis direction).

This may prevent interferences between the board support portion 22 and the base portion 12 during the rotation of the rotating frame 20. Further, through this configuration, the assembly apparatus 1 may be formed with a more compact and simple structure.

Meanwhile, in this embodiment, the rotating frame-side rotation coupling portion 16 may include a plurality of rotating frame-side rotation coupling portions arranged apart from each other along the extension direction of the rotation axis C. Accordingly, the rotating frame 20 may be supported by the fixing frame 10 more stably in a balanced manner.

By the above-described configuration, the rotating frame 20 of the assembly apparatus 1 according to an embodiment of the present disclosure may be rotated from phase in which the board support surface 23 is disposed facing upwards (positive direction of the Z axis) as shown in FIGS. 3 and 4 to phase in which the board support surface 23 is disposed facing downwards (positive) direction of the Z axis) as shown in FIGS. 8 and 9.

The rotation of the rotating frame 20 may be performed as shown in FIG. 7. Accordingly, as shown in FIGS. 1 and 2, the circuit board 5 may be moved to the upper surface 2a of the semi-assembly 2 and assembled to the assembly area by the assembly apparatus 1.

Meanwhile, referring back to FIGS. 3, 4, 8 and 9, the rotating frame 20 of the assembly apparatus 1 according to an embodiment of the present disclosure may include a sub-support portion 28. The sub-support portion 28 may be extended in the outward direction from the board support portion 22.

In this instance, the sub-support portion 28 may include a pair of sub-support portions, each sub-support portion disposed at each of two ends of the board support portion 22 in the extension direction (Y-axis direction). In addition, the sub-support portion 28 may be extended perpendicular to the extension direction of the board support portion 22 (Y-axis direction).

The sub-support portion 28 may perform many different functions. As an example, the sub-support portion 28 may perform a function of intuitively showing the phase (or rotational state) of the rotating frame 20 to the outside. As another example, the sub-support portion 8 may perform a balancing function when the rotating frame 20 rotates.

The first function of the above-listed functions will be described in more detail below.

As shown in FIGS. 3 and 4, when the end of the sub-support portion 28 faces rearwards (positive direction of the X axis), it may be easily seen from the outside that the rotating frame 20 is disposed such that the board support surface 23 faces upwards (positive direction of the Z axis).

On the contrary, as shown in FIGS. 7 and 8, when the end of the sub-support portion 28 faces frontwards (negative direction of the X axis), it may be easily seen from the outside that the rotating frame 20 is disposed such that the board support surface 23 faces downwards (negative direction of the Z axis).

Meanwhile, referring to FIGS. 2 to 4, 10 and 11, the rotating frame 20 of the assembly apparatus 1 according to an embodiment of the present disclosure may include a pin support portion 30 and an assembly apparatus-side guide pin 36 supported by the pin support portion 30.

In this embodiment, the pin support portion 30 may be provided as a block-shaped member connected to the side of the board support portion 22. However, the shape or structure of the pin support portion 30 is not limited to a particular one and may have any shape or structure for supporting the assembly apparatus-side guide pin 36.

In this embodiment, the pin support portion 30 may have a pin support surface 31. The assembly apparatus-side guide pin 36 may be protruded above the pin support surface 31. Accordingly, when the coupling hole forming portion 8 of the circuit board 5 is placed above the pin support surface 31, the end of the assembly apparatus-side guide pin 36 may be inserted into the coupling hole 9 of the coupling hole forming portion 8.

This configuration may increase the coupling strength between the rotating frame 20 and the circuit board 5, thereby preventing separation of the circuit board 5 from the rotating frame 20 during the rotation of the rotating frame 20.

In addition, the assembly apparatus-side guide pin 36 may act as a reference for guiding or adjusting the relative position between the circuit board 5 and the rotating frame 20. This is because the assembly apparatus-side guide pin 36 is inserted into the coupling hole 9 of the circuit board 5 to place the circuit board 5 on the board support surface 23.

Meanwhile, in this embodiment, the pin support surface 31 may face the direction parallel to the board support surface 23 of the board support portion 22. On the basis of FIG. 10, the pin support surface 31 may face upwards (positive direction of the Z axis).

Additionally, in this embodiment, the board support surface 23 may be parallel to the pin support surface 31. This may be because the circuit board 5 is provided in the shape of the flat plate.

As described in detail below, according to this embodiment, the assembly apparatus-side guide pin 36 may be moved in a direction perpendicular to the pin support surface 31 (or the board support surface 23), and the board support surface 23 and the pin support surface 31 may be spaced apart from each other in the movement direction of the assembly apparatus-side guide pin 36. On the basis of FIGS. 9 and 10, the assembly apparatus-side guide pin 36 may move in the top-bottom direction (Z-axis direction).

In this instance, in this embodiment, the pin support surface 31 may be located at a more rear position than the board support surface 23 in the movement direction of the assembly apparatus-side guide pin 36. On the basis of FIGS. 9 and 10, the pin support surface 31 may be located at a lower position (negative direction of the Z axis) than the board support surface 23. This may enhance the assembly between the circuit board 5, the rotating frame 20 and the semi-assembly 2.

Describing in detail, the coupling hole forming portion 8 of the circuit board 5 may bend to some extent in the space between the board support surface 23 and the pin support surface 31. Accordingly, the assembly apparatus-side guide pin 36 may be inserted into the coupling hole 9 more easily.

Alternatively, as shown in FIG. 13, the semi-assembly-side guide pin 3 may be formed on the upper surface 2a of the semi-assembly 2, and the gap between the board support surface 23 and the pin support surface 31 may provide the clearance for the semi-assembly-side guide pin 3.

Referring back to FIGS. 10 and 11, in this embodiment, the assembly apparatus-side guide pin 36 may be movably coupled to the pin support portion 30. To this end, the pin support portion 30 may have a guide pin hole 33 therein. The guide pin hole 33 may be a hole into which the assembly apparatus-side guide pin 36 is movably inserted. The opening of the guide pin hole 33 may be located at the pin support surface 31.

In this embodiment, the guide pin hole 33 may have a first length L1 in the movement direction of the assembly apparatus-side guide pin 36. This configuration will be described in detail below together with the length of the assembly apparatus-side guide pin 36.

In this instance, in this embodiment, the guide pin hole 33 may include a first segment 33a and a second segment 33b. The first segment 33a may be a part connected to the opening of the guide pin hole 33, and the second segment 33b may be another part connected to the opening of the guide pin hole 33 through the medium of the first segment 33a.

In this instance, in this embodiment, the first segment 33a and the second segment 33b may have different diameters. As shown, the diameter of the first segment 33a may be smaller than the diameter of the second segment 33b. Hereinafter, the diameter of the first segment 33a is referred to as first diameter D1. This configuration will be described in detail below together with the diameter of the assembly apparatus-side guide pin 36.

In this embodiment, the assembly apparatus-side guide pin 36 may be movably coupled to the guide pin hole 33 in the length direction. In other words, the assembly apparatus-side guide pin 36 may be configured to slide along the guide pin hole 33.

Meanwhile, in this embodiment, the length of the assembly apparatus-side guide pin 36 may have a second length L2. In this instance, the second length L2 may be equal to or shorter than the first length L1. Accordingly, the assembly apparatus-side guide pin 36 may be completely inserted into the guide pin hole 33, and the assembly apparatus-side guide pin 36 and the circuit board 5 may be decoupled from each other.

In this instance, the complete insertion of the assembly apparatus-side guide pin 36 into the guide pin hole 33 does not signify the insertion of the assembly apparatus-side guide pin 36 into the guide pin hole 33 up to the end, and may signify the insertion into the guide pin hole 33 to the extent to which the end of the assembly apparatus-side guide pin 36 sticks out of the coupling hole 9 of the circuit board 5.

As described above, when the negative pressure of the suction portion 24 is removed in a state that the assembly apparatus-side guide pin 36 and the circuit board 5 is decoupled from each other, the circuit board 5 may be detached (separated) from the rotating frame 20 and placed on the upper surface 2a of the semi-assembly 2. Accordingly, the semi-assembly 2 and the circuit board 5 may be assembled together.

Meanwhile, in this embodiment, the assembly apparatus-side guide pin 36 may include a first part 36a and a second part 36b extended in the length direction and connected to each other. The first part 36a may be a part disposed in the first segment 33a of the guide pin hole 33, and the second part 36b may be a part disposed in the second segment 33b of the guide pin hole 33.

In this instance, in this embodiment, the second part 36b may have a second diameter D2. Additionally, the second diameter D2 may be larger than the first diameter D1 of the first segment 33a. This may prevent the assembly apparatus-side guide pin 36 from moving out of the guide pin hole 33. It is because the second part 36a is fitted against the inner wall of the guide pin hole 33 and cannot slip out of the first segment 33a.

Referring to FIG. 11, in this embodiment, the rotating frame 20 may include an elastic member 34. The elastic member 34 may be a member for elastically supporting the assembly apparatus-side guide pin 36. As an example, the elastic member 34 may include a spring, but is not limited thereto.

In this embodiment, in a normal condition in which no external force is applied, the end of the assembly apparatus-side guide pin 36 may be protruded above the pin support surface 31 by the elastic restoring force of the elastic member 34.

In this instance, the end of the assembly apparatus-side guide pin 36 protruded above the pin support surface 31 may signify that the end of the assembly apparatus-side guide pin 36 is protruded enough to be inserted into the coupling hole 9 of the circuit board 5 placed on the board support surface 23.

Meanwhile, when an external force is applied to the assembly apparatus-side guide pin 36, the elastic member 34 may be deformed, and the assembly apparatus-side guide pin 36 may go into the guide pin hole 33. Accordingly, as the assembly apparatus-side guide pin 36 goes out of the coupling hole 9, they may be decoupled from each other.

Meanwhile, referring to FIGS. 3 and 4, in this embodiment, the pin support portion 30 and the assembly apparatus-side guide pin 36 may include a plurality of pin support portions 30 and a plurality of assembly apparatus-side guide pins 36 arranged apart along the extension direction of the board support portion 22 (Y-axis direction). In this instance, the number of pin support portions 30 and the number of assembly apparatus-side guide pins 36 may correspond to the number of coupling holes of the circuit board.

By this operation, the relative position between the circuit board 5 and the semi-assembly 2 may be guided. Hereinafter, the operation will be described in detail with varying drawings.

Referring to FIGS. 1, 2, 11 and 12, when the assembly apparatus 1 is fixed to the semi-assembly 2 and the rotating frame 20 is rotated toward the semi-assembly 2, the board support surface 23 and the pin support surface 31 may get closer to each other, facing the upper surface 2a of the semi-assembly 2.

Referring to FIGS. 12 and 13, when the board support portion 22 and the semi-assembly 2 are close to each other by a predetermined distance, the end of the assembly apparatus-side guide pin 36 and the end of the semi-assembly-side guide pin 3 may contact each other.

Additionally, as the rotating frame 20 is rotated further, when the semi-assembly-side guide pin 3 presses the assembly apparatus-side guide pin 36, the elastic member 34 may be deformed and the assembly apparatus-side guide pin 36 may go into the guide pin hole 33.

Accordingly, as the end of the assembly apparatus-side guide pin 36 goes out of the coupling hole 9 of the circuit board 5, the assembly apparatus-side guide pin 36 and the circuit board 5 may be decoupled from each other.

In response to this, the semi-assembly-side guide pin 3 of the semi-assembly 2 may be inserted into the coupling hole 9 of the circuit board 5 in place of the assembly apparatus-side guide pin 36. Accordingly, the circuit board 5 may be coupled to the upper surface 2a of the semi-assembly 2.

Additionally, when the negative pressure applied to the suction portion 24 is removed, the extension portion 6 of the circuit board 5 may be detached from the board support surface 23. Accordingly, the circuit board 5 may be separated from the rotating frame 20 and coupled to the upper surface 2a of the semi-assembly 2. Subsequently, the rotating frame 20 may be rotated in the opposite direction away from the semi-assembly 2 and the circuit board 5.

When the guide pins 3, 36 do not match, it may be determined that the relative position of the assembly apparatus 1 and the semi-assembly 2 are improperly fixed. In this case, it is necessary to re-adjust the relative position of the assembly apparatus 1 and the semi-assembly 2. Through the operation of the assembly apparatus-side guide pin 36, the relative position between the circuit board 5 and the semi-assembly 2 may be guided.

Although the present disclosure has been hereinabove described with regard to a limited number of embodiments and drawings, the present disclosure is not limited thereto, and may be embodied in different forms by persons having ordinary skill in the technical field pertaining to the present disclosure within the technical aspect of the present disclosure and the appended claims and their equivalent scope.

### [List of Reference Numerals]

- 1:: Battery module assembly apparatus
- 2:: Semi-assembly
- 5:: Circuit board
- 10:: Fixing frame
- 12:: Base portion
- 13:: Assembly apparatus-side coupling portion
- 14:: Fixing portion
- 15:: Lever portion
- 16:: Fixing frame-side rotation coupling portion
- 18:: Grip portion
- 20:: Rotating frame
- 22:: Board support portion
- 24:: Suction portion
- 26:: Rotating frame-side rotation coupling portion
- 28:: Sub-support portion
- 30:: Pin support portion
- 34:: Elastic member
- 36:: Guide pin

## Claims

1. A battery module assembly apparatus for assembling a circuit board to a semi-assembly of a battery module, the battery module assembly apparatus comprising:
a fixing frame that is fixed to a side of the semi-assembly; and
a rotating frame that is rotatably coupled to the fixing frame and configured to move the circuit board placed on a side of the rotating frame to an outer surface of the semi-assembly.

2. The battery module assembly apparatus according to claim 1,
wherein the rotating frame includes:
a board support portion extended in an arbitrary direction so that the circuit board is placed.

3. The battery module assembly apparatus according to claim 2,
wherein the board support portion includes a suction portion to hold the circuit board by suction.

4. The battery module assembly apparatus according to claim 3,
wherein the suction portion includes a plurality of suction portions arranged apart from each other along an extension direction of the board support portion.

5. The battery module assembly apparatus according to claim 2,
wherein the rotating frame includes:
a sub-support portion extended from the board support portion.

6. The battery module assembly apparatus according to claim 5,
wherein the sub-support portion includes a pair of sub-support portions, each sub-support portion disposed at each of two ends of the board support portion in the extension direction.

7. The battery module assembly apparatus according to claim 2,
wherein the rotating frame further includes:
a pin support portion disposed on a side of the board support portion in the extension direction; and
an assembly apparatus-side guide pin that is protruded outward from the pin support portion and inserted into a coupling hole of the circuit board.

8. The battery module assembly apparatus according to claim 7,
wherein the assembly apparatus-side guide pin includes a plurality of assembly apparatus-side guide pins arranged apart along the extension direction of the board support portion.

9. The battery module assembly apparatus according to claim 7,
wherein the assembly apparatus-side guide pin is movably coupled to the pin support portion in a length direction.

10. The battery module assembly apparatus according to claim 9,
wherein the pin support portion includes an elastic member to elastically support the assembly apparatus-side guide pin.

11. The battery module assembly apparatus according to claim 10,
wherein the pin support portion is connected to the side of the board support portion.

12. The battery module assembly apparatus according to claim 11,
wherein the board support portion has a board support surface where a part of the circuit board is placed in contact,
wherein the pin support portion has a pin support surface where an end of the assembly apparatus-side guide pin sticks out, and
wherein the pin support surface and the board support surface have different heights in a movement direction of the assembly apparatus-side guide pin.

13. The battery module assembly apparatus according to claim 9,
wherein the pin support portion has a guide pin hole into which the assembly apparatus-side guide pin is inserted, and
wherein the assembly apparatus-side guide pin has a shorter length than the guide pin hole.

14. The battery module assembly apparatus according to claim 13,
wherein at least a part of the assembly apparatus-side guide pin has a larger diameter than a segment of the guide pin hole to prevent the assembly apparatus-side guide pin from moving out of the pin support portion.

15. The battery module assembly apparatus according to claim 13,
wherein the guide pin is configured to go into the guide pin hole when the guide pin is pressed by a part of the semi-assembly as the rotating frame rotates.

16. The battery module assembly apparatus according to claim 1,
wherein the fixing frame includes:
a base portion extended in a direction so as to be disposed parallel to the side of the semi-assembly; and
a fixing portion disposed at each of two sides of the base portion in an extension direction and fixed to a corner area of the semi-assembly.

17. The battery module assembly apparatus according to claim 16,
wherein the rotating frame is configured to:
rotate around an axis parallel to the extension direction of the base portion.

18. The battery module assembly apparatus according to claim 16,
wherein the fixing portion has a shape of a clamp that holds or releases the corner area of the semi-assembly.

19. The battery module assembly apparatus according to claim 16,
wherein the base portion has a shape of a flat plate disposed parallel to the side of the semi-assembly, and
wherein an assembly apparatus-side coupling portion is present on a surface of the base portion, and is coupled to a part of the semi-assembly by close-fitting.

20. The battery module assembly apparatus according to claim 19,
wherein the assembly apparatus-side coupling portion includes a plurality of assembly apparatus-side coupling portions arranged apart from each other in the extension direction of the base portion.
